# EUROPÄISCHE PATENTSCHRIFT

(11) **EP 1 882 621 B1**
(45) Veröffentlichungstag und Bekanntmachung des Hinweises auf die Patenterteilung: **28.04.2010**
(21) Anmeldenummer: 06015457.2
(22) Anmeldetag: 25.07.2006
(51) Int. Cl.: B62D 1/19

(54) **Pyrotechnischer Schalter - Sprengbolzen**
Pyrotechnic switch - explosive bolt
Actionneur pyrotechnique

(43) Veröffentlichungstag der Anmeldung: 30.01.2008
(73) Patentinhaber: Delphi Technologies, Inc., Troy, Michigan 48007 (US)
(72) Erfinder: Deutschmann, Claus-Werner, 90579 Lagenzenn (DE); Lang, Bernhard, 90537 Feucht (DE)
(74) Vertreter: Denton, Michael John

(56) Entgegenhaltungen:
- EP-A2- 1 134 131
- EP-A2- 1 593 579
- WO-A-97/25237
- DE-A1- 10 053 182
- DE-A1- 19 802 527
- US-A- 4 244 386

## Beschreibung

Die vorliegende Erfindung betrifft eine pyromechanische Entriegelungsvorrichtung mit einem Gehäuse, einem mit dem Gehäuse verbundenen pyrotechnischen Zündelement und einem Verriegelungselement, welches durch Beaufschlagung durch das Zündelement, relativ zu dem Gehäuse bewegbar und aus einer Verriegelungslage in eine Entriegelungslage bringbar ist.

Eine derartige Entriegelungsvorrichtung ist grundsätzlich bekannt und dient beispielsweise dazu, in einem Notfall eine Bewegung zweier mechanischer Bauteile relativ zueinander freizugeben. Durch die Entriegelungsvorrichtung kann bei einem Unfall z.B. ein federvorgespannter Überrollbügel oder eine Teleskoplenksäule eines Kraftfahrzeugs entriegelt werden, um dadurch die Verletzungsgefahr für einen Fahrzeuginsassen zu verringern.

Bei einer bekannten Entriegelungsvorrichtung ist das Verriegelungselement in dem Gehäuse linear geführt. Durch geeignete Fixiermittel, wie beispielsweise in Rastnuten des Gehäuses eingreifende Rastvorsprünge des Verriegelungselements, wird das Verriegelungselement in seiner Verriegelungslage an dem Gehäuse fixiert. Außerdem können entsprechende Fixiermittel zur Fixierung des Verriegelungselements in seiner Entriegelungslage vorgesehen sein. Diese Art der Fixierung des Verriegelungselements an dem Gehäuse macht eine prozesssichere Herstellung und Montage der Einzelteile zu einem zuverlässig funktionierenden Gesamtsystem aufwendig.

Die EP-A2-1 593 579 offenbart eine mit einem pyrotechnischen Zündelement versehene Schraube, die dem Oberbegriff des Anspruchs 1 entspricht.

In der US-A-4 244 368 ist ein Ventil mit einer pyrotechnischen Trennvorrichtung in der Form eines Gewindebolzens offenbart, in den eine pyrotechnische Mischung eingebracht ist. Beim Zünden der pyrotechnischen Mischung teilt sich der Gewindebolzen in zwei Teile und öffnet das Ventil.

Die DE 100 53 182 A1 beschreibt eine teleskopartige Fahrzeuglenksäulenvorrichtung mit einer pyrotechnischen Einrichtung. Ein Auslösen der pyrotechnischen Einrichtung bewirkt die Freigabe einer teleskopartigen Bewegung der Elemente der Fahrzeuglenksäulenvorrichtung.

Der Erfindung liegt die Aufgabe zugrunde, eine pyromechanische Entriegelungsvorrichtung zu schaffen, die mit einem geringeren wirtschaftlichen Aufwand herstellbar ist und gleichzeitig eine zuverlässige Funktion gewährleistet.

Die Aufgabe wird durch eine pyromechanische Entriegelungsvorrichtung mit den Merkmalen des Anspruchs 1 und insbesondere dadurch gelöst, dass das Verriegelungselement vor Beaufschlagung durch das Zündelement einstückig mit dem Gehäuse ausgebildet ist, eine Kunststoffummantelung des Zündelements und das Gehäuse durch eine Schweißverbindung miteinander verbunden sind und das Verriegelungselement zumindest bereichsweise mit einer Schutzummantelung versehen ist. Erfindungsgemäß bildet das Verriegelungselement im Ruhezustand der Entriegelungsvorrichtung, d.h. vor Auslösung des Zündelements, also einen integralen Bestandteil des Gehäuses. Erst durch die Beaufschlagung durch das Zündelement wird das Verriegelungselement von dem Gehäuse gelöst, so dass eine Bewegung des Verriegelungselements relativ zum Gehäuse möglich ist.

Durch die einstückige Ausbildung von Verriegelungselement und Gehäuse ist die Entriegelungsvorrichtung einfacher und kostengünstiger herstellbar, weil das Verriegelungselement und das Gehäuse in einem Arbeitsgang ausgebildet werden können. Eine besonders kostengünstige Fertigung der Entriegelungsvorrichtung ist z.B. möglich, wenn das Gehäuse und das Verriegelungselement durch ein Spritzgussverfahren, insbesondere Kunststoff-Spritzgussverfahren, hergestellt werden.

Durch die einstückige Ausbildung von Verriegelungselement und Gehäuse ist auch die Montage der Entriegelungsvorrichtung vereinfacht, da das Verriegelungselement nicht in einem separaten Arbeitsschritt in dem Gehäuse angeordnet bzw. an diesem fixiert zu werden braucht, sondern nach Herstellung der Gehäuse/Verriegelungselement-Kombination nur noch das Zündelement mit dem Gehäuse verbunden zu werden braucht.

Durch die einstückige Ausbildung von Verriegelungselement und Gehäuse ist außerdem sichergestellt, dass das Verriegelungselement stets korrekt relativ zu dem Gehäuse positioniert ist und sich somit in einer gewünschten Relativlage zu dem Zündelement befindet. Dies gewährleistet eine zuverlässige Funktion der Entriegelungsvorrichtung.

Erfindungsgemäß sind die Kunststoffummantelung des Zündelements und das Gehäuse durch eine Schweißverbindung, z.B. eine Ultraschall-, Reib-, Laser- oder Spritzschweißverbindung, miteinander verbunden. Das Verschweißen von Zündelement und Gehäuse ermöglicht nicht nur eine im Wesentlichen gasdichte und druckfeste Verbindung von Zündelement und Gehäuse, sondern vereinfacht auch die Herstellung der Entriegelungsvorrichtung.

Die erfindungsgemäß vorgesehene Schutzummantelung bewirkt eine mechanische Verstärkung des Verriegelungselements und ermöglicht die Aufnahme höherer Verriegelungskräfte. Bevorzugt weist die Schutzummantelung ein Material mit einer höheren Festigkeit als das Material des Verriegelungselements auf. Die Schutzummantelung kann beispielsweise durch einen das Verriegelungselement umgebenden Rohrabschnitt gebildet sein, welcher z.B. ein Metallmaterial aufweist.

Vorteilhafte Ausbildungen der Entriegelungsvorrichtung sind den Unteransprüchen, der Beschreibung und der Zeichnung zu entnehmen.

Gemäß einer Ausführungsform ist das Verriegelungselement durch einen bei Beaufschlagung des Verriegelungselements durch das Zündelement abscherbaren Verbindungssteg mit dem Gehäuse verbunden. Ein derartiger Verbindungssteg sorgt nicht nur für eine sichere Halterung des Verriegelungselements an dem Gehäuse, sondern auch für eine leichte Trennung des Verriegelungselements von dem Gehäuse bei Zündung des Zündelements.

Der Verbindungssteg kann unterbrechungsfrei ausgebildet sein oder mehrere über den Umfang des Verriegelungselements verteilt angeordnete

Stegabschnitte umfassen. Der Verbindungssteg kann mit anderen Worten also durchgehend oder mit Unterbrechungen ausgebildet sein. Entscheidend ist, dass er eine Engstelle bildet, die sich durch Ausüben einer gewissen Kraft aufreißen lässt. Durch eine geeignete geometrische Ausgestaltung des Verbindungsstegs kann sowohl eine Betriebskraft aufgenommen, als auch das Abreißverhalten so eingestellt werden, dass bei Auslösung des Zündelements ein für die Innenballistik optimaler Innendruck in der Entriegelungsvorrichtung und somit letztlich eine besonders schnelle Bewegung des Verriegelungselements in seine Entriegelungslage erreicht wird. Sofern das Gehäuse und das Verriegelungselement durch einen Kunststoff-Spritzvorgang hergestellt werden, kann durch eine geeignete geometrische Ausgestaltung des Verbindungsstegs außerdem ein prozesssicheres Fließverhalten für den Kunststoff erzielt werden.

Gemäß einer weiteren Ausführungsform ist das Verriegelungselement in einem dem Zündelement abgewandten Bereich des Gehäuses mit diesem Verbunden. Das Verriegelungselement ist mit anderen Worten nicht in dem Gehäuse gelagert, sondern gehäuseendseitig, z.B. nach Art einer Kappe, an diesem angebracht.

Vorteilhafterweise sind das Zündelement und das Gehäuse im Wesentlichen gasdicht und druckfest miteinander verbunden. Auf diese Weise kann sich bei einer Zündung des Zündelements innerhalb kürzester Zeit ein maximaler Gasdruck in dem Gehäuse aufbauen, was zu einer besonders schnellen Bewegung des Verriegelungselements in seine Entriegelungslage beiträgt.

Durch das Zündelement einerseits und das durch einen durchgehenden Verbindungssteg mit dem Gehäuse verbundene Verriegelungselement andererseits ist das Gehäuse gewissermaßen hermetisch abgeschlossen. Dadurch ist im Inneren des Gehäuses ein Druckraum ausgebildet, welcher einen noch schnelleren Druckaufbau bei Auslösung des Zündelements und somit eine noch schnellere Trennung des Verriegelungselements von dem Gehäuse und Bewegung des Verriegelungselements in seine Entriegelungslage ermöglicht. Der Innenraum ist auf diese Weise vor äußeren Einflüssen, wie z.B. einem Eindringen von Flüssigkeit, Feuchtigkeit oder Staub, geschützt, so dass eine einwandfreie Trennfunktion und Bewegung des Verriegelungselements dauerhaft gewährleistet ist. Außerdem ist durch das abgeschlossene Gehäuse ein Explosivstoff des Zündelements vor äußeren Einflüssen, wie z.B. Feuchtigkeit geschützt, wodurch eine zuverlässige Funktion der Entriegelungsvorrichtung dauerhaft gewährleistet ist.

Weiterer Gegenstand der Erfindung ist außerdem eine Verriegelungsanordnung mit einem ersten Körper, einem relativ zum ersten Körper bewegbaren zweiten Körper und einer mit dem ersten Körper fest verbundenen Entriegelungsvorrichtung der voranstehend beschriebenen Art, deren Verriegelungselement in seiner Verriegelungslage mit dem zweiten Körper in Eingriff steht, um eine Relativbewegung zwischen den Körpern zu verhindern, und in seiner Entriegelungslage mit dem zweiten Körper außer Eingriff gebracht ist, um eine Relativbewegung zwischen den Körpern zu ermöglichen.

In einem Ruhezustand der Verriegelungsanordnung sind der erste Körper und der zweite Körper durch die Entriegelungsvorrichtung aneinander fixiert. Das Verriegelungselement der Entriegelungsvorrichtung kann zu diesem Zweck beispielsweise nach Art eines Arretierstifts in eine entsprechend ausgebildete Öffnung des zweiten Körpers eingreifen. In diesem Zustand kann die Entriegelungsvorrichtung eine definierte Betriebs- oder Vorspannkraft, d.h. eine Relativkraft zwischen den Körpern, aufnehmen. Bei einer Auslösung der Entriegelungsvorrichtung wird das Verriegelungselement durch den durch das gezündete Zündelement erzeugten Gasdruck von dem Gehäuse abgesprengt. Dadurch gelangen das Verriegelungselement und der zweite Körper außer Eingriff, so dass sich die Körper relativ zueinander bewegen können. Der zweite Körper kann z.B. durch ein im Ruhezustand der Verriegelungsvorrichtung vorgespanntes Federelement relativ zu dem ersten Körper verschoben oder verschwenkt werden, um eine Sicherheitsfunktion zu erfüllen. Beispielsweise kann es sich bei der Verriegelungsanordnung um eine Lenksäule, einen Überrollbügel, eine Kopfstütze, eine Sitzhalterung, ein Scharnier oder ein Schloss, insbesondere eines Kraftfahrzeugs, handeln.

Weiterer Gegenstand der Erfindung ist außerdem ein Verfahren zur Herstellung einer pyromechanischen Entriegelungsvorrichtung der voranstehend beschriebenen Art, bei welchem ein Gehäuse und ein an dem Gehäuse gehaltenes Verriegelungselement einstückig miteinander ausgebildet werden, z.B. durch einen Kunststoff-Spritzgussprozess, eine Kunststoffummantelung eines pyrotechnischen Zündelements zum Beaufschlagen des Verriegelungselements durch einen Schweißprozess mit dem Gehäuse verbunden wird und das Verriegelungselement zumindest bereichsweise mit einer Schutzummantelung versehen wird.

Das erfindungsgemäße Verfahren ermöglicht eine besonders kostengünstige Herstellung einer pyromechanischen Entriegelungsvorrichtung, welche die voranstehend genannten Vorteile aufweist.

Nachfolgend wird die Erfindung rein beispielhaft anhand einer vorteilhaften Ausführungsform unter Bezugnahme auf die beigefügte Zeichnung beschrieben. Es zeigen:
- Fig. 1: Längsschnittansichten einer erfindungsgemäßen Entriege- lungsvorrichtung;
- Fig. 2: mehrere Abwicklungsprofile eines Verbindungsstegs der Entriegelungsvorrichtung von Fig. 1;
- Fig. 3: Schnittansichten einer Verriegelungsanordnung mit einer Entriegelungsvorrichtung von Fig. 1 (a) im Ruhezustand, (b) bei Auslösung der Entriegelungsvorrichtung und (c) mit re- lativ zueinander bewegten Körpern; und
- Fig. 4: Teilschnittansichten unterschiedlicher Varianten der Befes- tigung einer Entriegelungsvorrichtung an einem Körper ei- ner Verriegelungsanordnung.

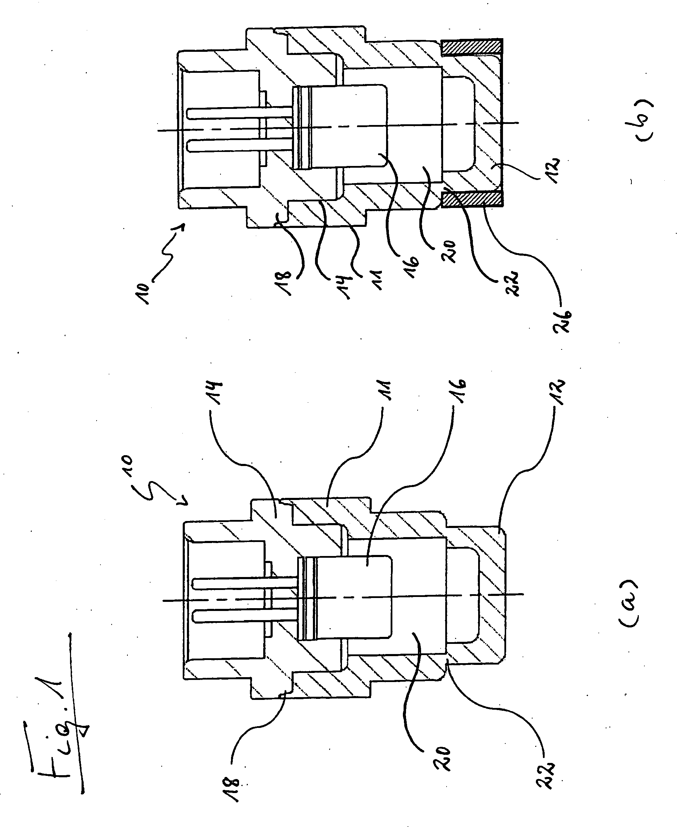

In Fig. 1 a ist eine erfindungsgemäße pyromechanische Entriegelungsvorrichtung 10 in ihrem Ruhezustand, d.h. also vor ihrer Auslösung, dargestellt.

Die Entriegelungsvorrichtung 10 umfasst ein als Kunststoff-Spritzgussteil ausgebildetes Gehäuse 11, ein Verriegelungselement 12 und ein pyrotechnisches Zündelement 14.

Das Zündelement 14 weist einen einen Explosivstoff beherbergenden Zündabschnitt 16 auf, der teilweise von einer Kunststoffummantelung 18 umgeben ist. Das Zündelement 14 ist so an das Gehäuse 11 angesetzt, dass der Zündabschnitt 16 in einen Innenraum 20 des Gehäuses 11 ragt. Die Kunststoffummantelung 18 des Zündelements 14 ist mittels einer Schweißverbindung, z.B. einer Ultraschall-, Reib-, Laser- oder Spritzschweißverbindung, im Wesentlichen gasdicht und druckfest mit dem Gehäuse 11 verbunden.

Das Verriegelungselement 12 ist nach Art einer Kappe an einer dem Zündelement 14 abgewandten Seite des Gehäuses 11 angeordnet und einstückig mit dem Gehäuse 11 ausgebildet. Dabei ist das Verriegelungselement 12 durch einen Verbindungssteg 22 mit dem Gehäuse 11 verbunden, der eine Engstelle zwischen dem Gehäuse 11 und dem Verriegelungselement 12 bildet, welche ein Abscheren des Verriegelungselements 12 von dem Gehäuse 11 ermöglicht.

Im dargestellten Ausführungsbeispiel ist der Verbindungssteg 20 ringartig und insbesondere unterbrechungsfrei ausgebildet. Bei einer derartigen durchgehenden Ausbildung des Verbindungsstegs 22 ist der Innenraum 20 des Gehäuses 11 durch das Verriegelungselement 12 und den Verbindungssteg 22 einerseits und das mit dem Gehäuse 11 verschweißte Zündelement 14 andererseits im Wesentlichen hermetisch abgeschlossen. Der Innenraum 20 und der in dem Zündabschnitt 16 des Zündelements 14 befindliche Explosivstoff sind auf diese Weise vor äußeren Einflüssen, wie z.B. vor einem Eindringen von Flüssigkeit, Feuchtigkeit oder Staub, geschützt, so dass eine einwandfreie Trennfunktion und Bewegung des Verriegelungselements 12 dauerhaft gewährleistet ist.

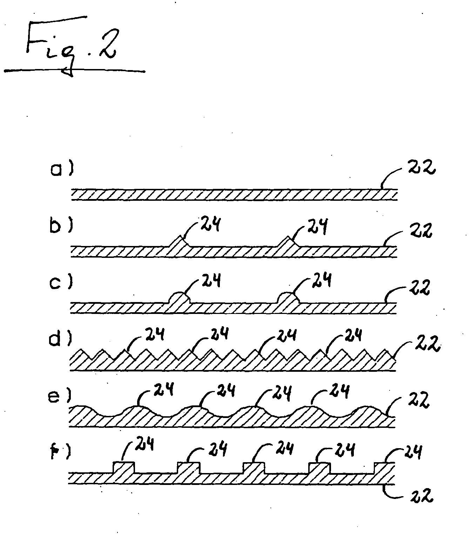

In Fig. 2 sind verschiedene mögliche Profile eines durchgehenden, d.h. nicht unterbrochenen, Verbindungsstegs 22, welcher das voranstehend beschriebene hermetische Verschließen des Gehäuseinnenraums 20 ermöglicht, dargestellt, und zwar jeweils in einem abgewickelten Zustand des Verbindungsstegs 22.

Fig. 2a zeigt einen Verbindungssteg 22 mit einer im Wesentlichen gleich bleibenden Stärke. Der Verbindungssteg 26 kann auch punktuell oder abschnittsweise verstärkt sein. Fig. 2b zeigt z.B. einen Verbindungssteg 22, welcher zusätzlich durch Rippen 24 verstärkt ist, die zueinander beabstandet sind und jeweils ein dreieckiges Profil aufweisen. Eine abgewandelte Form eines derartigen Verbindungsstegs 22, bei welcher die dreieckigen Rippen 24 eine Art Sägezahnmuster bilden, ist in Fig. 2d gezeigt. Anstelle von dreieckigen Rippen 24 können auch abgerundete Rippen 24 (Fig. 2c und Fig. 2e) oder viereckige Rippen 24 (Fig. 2f) vorgesehen sein.

Alternativ zu einer durchgehenden Ausbildung des Verbindungsstegs 22 kann der Verbindungssteg 22 umlaufend mit dem Verriegelungselement 12 und lediglich punktuell oder abschnittsweise mit dem Gehäuse 11 verbunden, d.h. also unterbrochen sein. Auch ein derartiger unterbrochener Verbindungssteg 22 kann in der voranstehend beschriebenen Weise durch Rippen 24 verstärkt sein.

Alternativ zu der umlaufenden Verbindung mit dem Verriegelungselement 12 und der punktuellen bzw. abschnittsweisen Verbindung mit dem Gehäuse 11 kann der Verbindungssteg 22 auch umgekehrt mit dem Gehäuse 11 umlaufend und mit dem Verriegelungselement 12 punktuell bzw. abschnittsweise verbunden sein. Es ist sogar möglich dass der Verbindungssteg 22 sowohl mit dem Verriegelungselement 12 als auch mit dem Gehäuse 11 punktuell bzw. abschnittsweise verbunden ist.

Wie in Fig. 1b gezeigt ist, kann das Verriegelungselement 12 zur Erhöhung seiner Stabilität mit einer Schutzummantelung 26 versehen sein. Im dargestellten Ausführungsbeispiel ist die Schutzummantelung 26 durch einen das Verriegelungselement 12 umgebenden Rohrabschnitt gebildet, der ein Material mit einer höheren Festigkeit als das Material des Verriegelungsabschnitts 12, z.B. ein Metallmaterial, aufweist.

Bei einer Auslösung der Entriegelungsvorrichtung 10 wird das Zündelement 14 gezündet und der in dem Zündabschnitt 16 befindliche Explosivstoff umgesetzt. Dadurch wird ein Gas freigesetzt, welches den Zündabschnitt 16 an seiner in den Innenraum 20 ragenden Vorderseite aufgesprengt und in dem Innenraum 20 einen Gasdruck aufbaut, der das Verriegelungselement 12 beaufschlagt.

Sobald der Gasdruck einen gewissen Schwellenwert überschreitet, genauer gesagt, sobald die auf das Verriegelungselement 12 wirkende Kraft grö-ßer als die Scherkraft an der durch den Verbindungssteg 22 gebildeten Engstelle wird, reißt das Verriegelungselement 12 von dem Gehäuse 11 ab. Da das Abreißverhalten letztlich von der geometrischen Gestaltung des Verbindungsstegs 22, d.h. also der Scherfläche zwischen Gehäuse 11 und Verriegelungselement 12, abhängt, lässt sich durch eine geeignete geometrische Ausbildung des Verbindungsstegs 22, z.B. durch die Auswahl eines geeigneten Abwicklungsprofils (Fig. 2), ein für die Innenballistik optimaler Gasdruck erreichen. Durch eine geeignete Auswahl der Querschnittsfläche des Verbindungsstegs 22 kann im Ruhezustand die für die jeweilige Anwendung erforderliche Betriebs- und/oder Vorspannkraft aufgenommen werden. Darüber hinaus kann über die Auswahl eines geeigneten geometrischen Profils des Verbindungsstegs 22 ein prozesssicheres Fließ- und Füllverhalten für den verwendeten Werkstoff erzielt werden, falls das Gehäuse 11 mittels eines Spritzprozesses hergestellt wird.

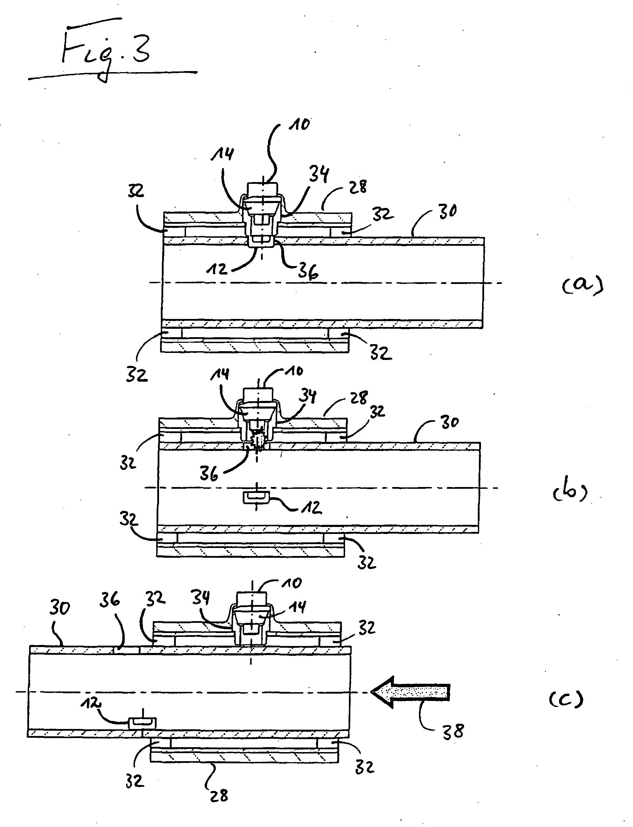

Anhand von Fig. 3 wird nun eine Anwendung der Entriegelungsvorrichtung 10 beschrieben.

Fig. 3 zeigt eine Verriegelungsanordnung mit einem ersten und einem zweiten hohlzylindrischen Körper 28, 30. Mit Hilfe von Lagermitteln 32 ist der zweite Körper 30 beweglich in dem ersten Körper 28 gelagert. Genauer gesagt ist der zweite Körper 30 in axialer Richtung relativ zu dem ersten Körper 28 verschiebbar, wobei die Lagermittel 32 als Führung für den zweiten Körper 30 dienen.

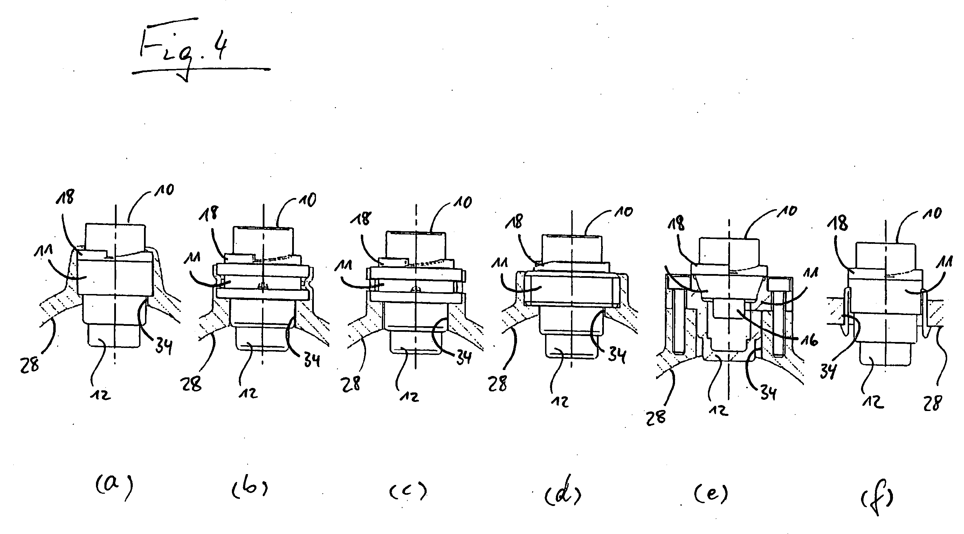

In dem ersten Körper 28 ist eine Öffnung 34 vorgesehen, in welche die Entriegelungsvorrichtung 10 eingesetzt ist. Bei der in Fig. 3 dargestellten Ausführungsform ist die Entriegelungsvorrichtung 10 mittels Bördeln fest mit dem ersten Körper 28 verbunden. Eine derartige Bördelverbindung ist auch in Fig. 4a dargestellt. Alternativ kann die Entriegelungsvorrichtung 10 beispielsweise mittels Rollieren (Fig. 4b), Crimpen (Fig. 4c), Schrauben (Fig. 4d), Schrauben und Nieten (Fig. 4e) oder Verrasten (Fig. 4f) an dem ersten Körper 28 befestigt sein.

In dem zweiten Körper 30 ist ebenfalls eine Öffnung 36 vorgesehen, die im Ruhezustand der Verriegelungsanordnung (Fig. 3a) mit der Bohrung 34 des ersten Körpers 28 ausgerichtet ist.

Das Verriegelungselement 12 ist derart an den Spaltabstand zwischen den Körpern 28, 30 angepasst, dass es im Ruhezustand nach Art eines Arretierstifts in die Bohrung 36 des zweiten Körpers 30 eingreift. Die Querschnitte des Verriegelungselements 12 und der Bohrung 36 sind dabei derart aneinander angepasst, dass das Verriegelungselement 12 im Wesentlichen spielfrei in der Bohrung 36 sitzt. Durch das in die Bohrung 36 eingreifende Verriegelungselement 12 ist der zweite Körper 30 an dem ersten Körper 28 fixiert und insbesondere gegen eine Verschiebung in axialer Richtung gesichert.

Bei einer Auslösung der Entriegelungsvorrichtung 10, d.h. bei einer Zündung des Zündelements 14, wird das Verriegelungselement 12 in der bereits beschriebenen Weise von dem Gehäuse 11 abgesprengt, d.h. von der Entriegelungsvorrichtung 10 getrennt (Fig. 3b). Durch den aus der Zündung des Zündelements 14 resultierenden Gasdruck wird das Verriegelungselement 12 durch die Bohrung 36 hindurch in das Innere des zweiten Körpers 30 beschleunigt, wodurch das Verriegelungselement 12 und der zweite Körper 30 außer Eingriff geraten.

Durch das Absprengen des Verriegelungselements 12 wird der zweite Körper 30 also freigegeben, so dass eine Bewegung des zweiten Körpers 30 relativ zum ersten Körper 28 möglich ist. Das Absprengen des Verriegelungselements 12 von der Entriegelungsvorrichtung 10 bewirkt mit anderen Worten eine Entriegelung der Verriegelungsanordnung.

In diesem entriegelten Zustand der Verriegelungsanordnung resultiert eine, beispielsweise durch ein im Ruhezustand der Verriegelungsanordnung vorgespanntes Federelement, in axialer Richtung auf den zweiten Körper 30 aufgeübte Kraft 38 zu einer Verschiebung des zweiten Körpers 30 relativ zum ersten Körper 28 (Fig. 3c).

Durch die schnelle und zuverlässige Auslösung der Entriegelungsvorrichtung 10 eignet sich die Verriegelungsanordnung besonders gut zum Freigeben einer Sicherheitsfunktion. So kann es sich bei der Verriegelungsanordnung um ein sicherheitsrelevantes Bauteil eines Kraftfahrzeugs handeln, z.B. um einen Überrollbügel, eine Lenksäule, eine Kopfstütze, eine Sitzhalterung, ein Scharnier oder ein Schloss, welches durch die pyromechanische Entriegelungsvorrichtung 10 bei bestimmungsgemäßem Gebrauch in einer Gebrauchsstellung arretiert und im Notfall entriegelbar ist, um in eine die Sicherheit eines Fahrzeuginsassen erhöhende Sicherheitsstellung gebracht zu werden.

### Bezugszeichenliste

- 10: Entriegelungsvorrichtung
- 11: Gehäuse
- 12: Verriegelungselement
- 14: Zündelement
- 16: Zündabschnitt
- 18: Kunststoffummantelung
- 20: Innenraum
- 22: Verbindungssteg
- 24: Rippe
- 26: Schutzummantelung
- 28: erster Körper
- 30: zweiter Körper
- 32: Lagermittel
- 34: Öffnung
- 36: Öffnung
- 38: Kraft

## Patentansprüche

1. Pyromechanische Entriegelungsvorrichtung (10) mit einem Gehäuse (11), einem mit dem Gehäuse (11) verbundenen pyrotechnischen Zündelement (14) und einem Verriegelungselement (12), welches durch Beaufschlagung durch das Zündelement (14) relativ zu dem Gehäuse (11) bewegbar und aus einer Verriegelungslage in eine Entriegelungslage bringbar ist, wobei das Verriegelungselement (12) vor Beaufschlagung durch das Zündelement (14) einstückig mit dem Gehäuse (11) ausgebildet ist,
**dadurch gekennzeichnet, dass**
eine Kunststoffummantelung (18) des Zündelements (14) und das Gehäuse (11) durch eine Schweißverbindung miteinander verbunden sind und das Verriegelungselement (12) zumindest bereichsweise mit einer Schutzummantelung (26) versehen ist.

2. Entriegelungsvorrichtung (10) nach Anspruch 1,
**dadurch gekennzeichnet, dass**
das Verriegelungselement (12) durch einen bei Beaufschlagung des Verriegelungselements (12) durch das Zündelement (14) abscherbaren Verbindungssteg (22) mit dem Gehäuse (11) verbunden ist.

3. Entriegelungsvorrichtung (10) nach Anspruch 2,
**dadurch gekennzeichnet, dass**
der Verbindungssteg (22) unterbrechungsfrei ausgebildet ist und/oder mehrere über den Umfang des Verriegelungselements (12) verteilt angeordnete Stegabschnitte umfasst.

4. Entriegelungsvorrichtung (10) nach zumindest einem der vorstehenden Ansprüche,
**dadurch gekennzeichnet, dass**
das Verriegelungselement (12) in einem dem Zündelement (14) abgewandten Bereich des Gehäuses (11) mit diesem verbunden ist.

5. Entriegelungsvorrichtung (10) nach zumindest einem der vorstehenden Ansprüche,
**dadurch gekennzeichnet, dass**
das Zündelement (14) und das Gehäuse (11) im Wesentlichen gasdicht und druckfest miteinander verbunden sind.

6. Entriegelungsvorrichtung (10) nach zumindest einem der vorstehenden Ansprüche,
**dadurch gekennzeichnet, dass**
das Gehäuse (11) und das Verriegelungselement (12) durch ein Spritzgussverfahren, insbesondere Kunststoff-Spritzgussverfahren hergestellt sind.

7. Entriegelungsvorrichtung (10) nach zumindest einem der vorstehenden Ansprüche,
**dadurch gekennzeichnet, dass**
das die Schutzummantelung (26) durch einen das Verriegelungselement (12) umgebenden Rohrabschnitt, z.B. aus einem Metallmaterial, gebildet ist.

8. Verriegelungsanordnung mit einem ersten Körper (28), einem relativ zum ersten Körper (28) bewegbaren zweiten Körper (30) und einer mit dem ersten Körper (28) fest verbundenen Entriegelungsvorrichtung (10) nach zumindest einem der vorstehenden Ansprüche, deren Verriegelungselement (12) in seiner Verriegelungslage mit dem zweiten Körper (30) in Eingriff steht, um eine Relativbewegung zwischen den Körpern (28, 30) zu verhindern, und in seiner Entriegelungslage mit dem zweiten Körper (30) außer Eingriff gebracht ist, um eine Relativbewegung zwischen den Körpern (28, 30) zu erlauben.

9. Verfahren zur Herstellung einer pyromechanischen Entriegelungsvorrichtung (10), insbesondere nach einem der Ansprüche 1 bis 7, bei dem
ein Gehäuse (11) und ein an dem Gehäuse (11) gehaltenes Verriegelungselement (12) einstückig miteinander ausgebildet werden, z.B. durch einen Kunststoff-Spritzgussprozess,
eine Kunststoffummantelung (18) eines pyrotechnischen Zündelements (14) zum Beaufschlagen des Verriegelungselements (12) durch einen Schweißprozess mit dem Gehäuse (11) verbunden wird, und
das Verriegelungselement (12) zumindest bereichsweise mit einer Schutzummantelung (26) versehen wird.

## Claims

1. Pyromechanical unlocking device (10) with a housing (11), a pyrotechnic ignition element (14) connected with the housing (11) and a locking element (12), which is movable relative to the housing (11) through impact by the ignition element (14) and can be brought from a locked position into an unlocked position, wherein the locking element (12) is integrally formed with the housing (11) before impact of the ignition element (14),
**characterized in that**
a plastic coating (18) of the ignition element (14) and the housing (11) are connected together by a welded connection and that the locking element (12) is provided at least partially with a protective covering (26).

2. Unlocking device (10) according to claim 1,
**characterized in that**
the locking element (12) is connected with the housing (11) through a connecting web (22) which can be sheared off through the impact of the ignition element (14) on the locking element (12).

3. Unlocking device (10) according to claim 2,
**characterized in that**
the connecting web (22) is formed without interruption and/or includes several web sections distributed over the circumference of the locking element (12).

4. Unlocking device (10) according to at least one of the preceding claims,
**characterized in that**
the locking element (12) is connected to the housing (11) in an area facing away from the ignition element (14).

5. Unlocking device (10) according to at least one of the preceding claims,
**characterized in that**
the ignition element (14) and the housing (11) are connected together essentially gastight and pressure-resistant.

6. Unlocking device (10) according to at least one of the preceding claims,
**characterized in that**
the housing (11) and the locking element (12) are produced by injection molding, in particular plastic injection molding.

7. Unlocking device (10) according to at least one of the preceding claims,
**characterized in that**
the protection covering (26) is formed of a pipe section, e.g. from a metal material, surrounding the locking element (12).

8. Locking arrangement with a first body (28), a second body (30) movable relative to the first body (28), and an unlocking device (10) firmly connected with the first body (28) according to at least one of the preceding claims, wherein the locking element (12) in its locked position is engaged with the second body (30) to prevent a relative movement between the bodies (28, 30) and in its unlocked position is brought out of engagement with the second body (30) to allow a relative movement between the bodies (28, 30).

9. Method for manufacturing a pyromechanical unlocking device (10), in particular according to one of the claims 1 to 7, wherein
a housing (11) and a locking element (12), held at the housing (11), are formed integrally, e.g. by a plastic injection molding process, and
a plastic coating (18) of a pyrotechnic ignition element (14) for impact on the locking element (12) is connected with the housing (11) by a welded connection, and
the locking element (12) is provided at least partially with a protective covering (26).

## Revendications

1. Dispositif de déverrouillage pyromécanique (10) comprenant un boîtier (11), un élément d'amorçage pyrotechnique (14) relié au boîtier, et un élément de verrouillage (12) qui, attaqué par l'élément d'amorçage (14), est déplaçable par rapport au boîtier (11) et peut être amené depuis une position de verrouillage jusque dans une position de déver-rouillage, et l'élément de verrouillage (12) est réalisé d'une seule pièce avec le boîtier (11) avant d'être attaqué par l'élément d'amorçage (14),
**caractérisé en ce que**
une enveloppe en matière plastique (18) de l'élément d'amorçage (14) et le boîtier (11) sont reliés l'une à l'autre par une jonction soudée, et l'élément de verrouillage (12) est doté au moins localement d'une enveloppe protectrice (26).

2. Dispositif de déverrouillage (10) selon la revendication 1,
**caractérisé en ce que** l'élément de verrouillage (12) est relié au boîtier (11) par une barrette de liaison (22) capable d'être cisaillée lors de l'at-taque de l'élément de verrouillage (12) par l'élément d'amorçage (14).

3. Dispositif de déverrouillage (10) selon la revendication 2,
**caractérisé en ce que** la barrette de liaison (22) est réalisée sans interruption et/ou **en ce qu'**elle comprend plusieurs tronçons de barrette agencés répartis sur la périphérie de l'élément de verrouillage (12).

4. Dispositif de déverrouillage (10) selon l'une au moins des revendications précédentes,
**caractérisé en ce que** l'élément de verrouillage (12) est relié au boîtier (11) dans une région de celui-ci détournée de l'élément d'amorçage (14).

5. Dispositif de déverrouillage (10) selon l'une au moins des revendications précédentes,
**caractérisé en ce que** l'élément d'amorçage (14) et le boîtier (11) sont reliés l'un à l'autre de manière essentiellement étanche aux gaz et résistant à la pression.

6. Dispositif de déverrouillage (10) selon l'une au moins des revendications précédentes,
**caractérisé en ce que** le boîtier (11) et l'élément de verrouillage (12) sont réalisés par un procédé de coulée par injection, en particulier un procédé de coulée par injection de matière plastique.

7. Dispositif de déverrouillage (10) selon l'une au moins des revendications précédentes,
**caractérisé en ce que** l'enveloppe protectrice (26) est formée par un tronçon de tube, par exemple en un matériau métallique, qui entoure l'élément de verrouillage (12).

8. Agencement de verrouillage comprenant un premier corps (28), un second corps (30) déplaçable par rapport au premier corps (28), et un dispositif de déverrouillage (10), fermement relié au premier corps (28), selon l'une au moins des revendications précédentes, dont l'élément de verrouillage (12) se trouve en engagement avec le second corps (30) dans sa position de verrouillage, afin d'empêcher un mouve-ment relatif entre les corps (28, 30), et qui est amené, dans sa position de déverrouillage, hors de son engagement avec le second corps (30), afin de permettre un mouvement relatif entre les corps (28, 30).

9. Procédé pour la réalisation d'un dispositif de déverrouillage pyromécanique (10), en particulier selon l'une des revendications 1 à 7, dans lequel
un boîtier (11) et un élément de verrouillage (12) maintenu sur le boîtier (11) sont réalisés d'un seul tenant l'un avec l'autre, par exemple par un processus de coulée par injection de matière plastique,
une enveloppe de matière plastique (18) d'un élément d'amorçage pyrotechnique (14), destiné à attaquer l'élément de verrouillage (12), est reliée au boîtier (11) par un processus de soudage, et
l'élément de verrouillage (12) est doté au moins localement d'une enveloppe protectrice (26).
